# EUROPEAN PATENT SPECIFICATION

(11) **EP 1 405 187 B1**
(45) Date of publication and mention of the grant of the patent: **10.04.2019**
(21) Application number: 02782501.7
(22) Date of filing: 08.07.2002
(51) Int. Cl.: G06F 11/00

(54) **METHOD AND SYSTEM FOR CORRELATING AND DETERMINING ROOT CAUSES OF SYSTEM AND ENTERPRISE EVENTS**
VERFAHREN UND SYSTEM ZUM KORRELIEREN UND BESTIMMEN VON WURZELURSACHEN VON SYSTEM- UND UNTERNEHMENSEREIGNISSEN
PROCEDE ET SYSTEME POUR CORRELER ET DETERMINER DES CAUSES PROFONDES D'EVENEMENTS DANS UN SYSTEME OU UNE ENTREPRISE

(30) Priority: 06.07.2001 US 303447 P
(43) Date of publication of application: 07.04.2004
(73) Proprietor: CA, Inc., Islandia, NY 11749 (US)
(72) Inventor: CONNELLY, Kieron, Guildford, Surrey GU4 7RD (GB); KAUR Satwant, (US); HOWELL, Mark, (US)
(74) Representative: Dunlop, Hugh Christopher
(86) International application number: PCT/US2002/021376
(87) International publication number: WO 2003/005200

(56) References cited:
- US-A- 5 428 619
- US-A- 5 488 697
- US-A- 5 539 877
- US-A- 5 539 877
- US-A- 5 864 662
- "INPUT/OUTPUT EVENT ANALYSIS" IBM TECHNICAL DISCLOSURE BULLETIN, IBM CORP. NEW YORK, US, vol. 40, no. 7, July 1997 (1997-07), pages 117-128, XP000728427 ISSN: 0018-8689

## Description

### Cross Reference to Related Applications

This application claims priority to U.S. provisional application entitled "Method and System for Correlating and Determining Root Causes of System and Enterprise Events," Serial No. 60/303,447, filed July 6, 2001.

### Technical Field

The methods, systems, graphical user interface ("GUI"), computer readable media, and application programming interface ("API") described herein relate generally to information and data management and more particularly to enterprise event monitoring and filtering.

### Background

Enterprises employ large, complex, computing environments that include a number of enterprise components (e.g., servers, routers, databases, mainframes, personal computers, intelligent agents, business applications). Systems that monitor complex enterprise computing environments are known in the art (e.g., U.S. Patent No. 5,958,012, "Network Management System Using Virtual Reality Techniques to Display and Simulate Navigation to Network Components"). Monitoring systems may rely on enterprise components generating and reporting events when they experience problems (e.g., disk crash, server crash, network congestion, database access failure). However, when a first enterprise component experiences a problem, (e.g., disk crash) the problem may have a ripple effect that causes other enterprise components to experience problems (e.g., database access failure). Therefore, a conventional monitoring system receives enterprise events from enterprise components where many of the events are symptomatic events (e.g., generated and/or reported as a result of other, more fundamental events) rather than root cause events (e.g., fundamental events). Distinguishing between symptomatic events and root cause events has historically been difficult, requiring skilled operators and significant time commitments.

Relationships and dependencies existing between hardware and software components within an enterprise computing environment lead to a single root cause producing symptomatic events that may confuse operators and delay the identification of, and therefore the resolution of, the root problem. For example, a software component like a database management program depends on at least two hardware components like a processor and a disk to perform database management functions. Therefore, if either the disk or processor experiences a problem, in addition to the disk and/or processor generating and reporting enterprise events (e.g., disk write failed), the database management program is likely to generate and report enterprise events when database access attempts fail (e.g., a database write failed). Thus, a system and/or method monitoring the enterprise computing environment will be presented with both symptomatic events from the database management program and root cause events from the hardware. Conventionally, distinguishing between symptomatic and root cause events has been difficult. One technique for identifying a root cause is to establish pre-defined causes for an event or error and collect multiple events and identify the single pre-defined cause common to the multiple events as provided in US 5,539,877.

### Summary

The following summary presents a simplified discussion of example enterprise management methods, systems, GUIs, computer readable media, and APIs to provide a basic understanding of some aspects of correlating and determining root causes of system and enterprise events. This summary is not an extensive overview and is not intended to identify key or critical elements or to delineate the scope of the methods, etc.

According to one aspect, the present invention provides a computer implemented method for enterprise component management as set out in claim 1.

According to yet another aspect, the present invention provides a system for determining a root cause of an enterprise event as set out in claim 14.

In accordance with these aspects of the application, certain illustrative examples of the methods, etc. are described herein in connection with the following description and the annexed drawings. These examples are indicative, however, of but a few of the various ways in which the principles of the methods and systems may be employed and thus are intended to include equivalents. Other advantages and novel features may become apparent from the following detailed description when considered in conjunction with the drawings.

### Brief Description of the Drawings

Figure 1 is a schematic block diagram of an example computing environment that can support example systems and/or methods for enterprise management.
Figure 2 illustrates two example transaction pipelines.
Figure 3 illustrates an example network configuration of a cooperating set of root cause determining systems and/or methods.
Figure 4 is a schematic block diagram that illustrates an example system for determining a root cause of an enterprise event.
Figure 5 is a schematic block diagram that illustrates an example system for determining a root cause of an enterprise event where the system includes an impact analyzer.
Figure 6 is a schematic block diagram that illustrates example logging data stores associated with a system for determining a root cause of an enterprise event.
Figure 7 illustrates an example application programming interface employed with a system and/or method for enterprise management.
Figure 8 is a flow chart that illustrates an example method for enterprise management.
Figure 9 is a flow chart that illustrates an example method for relating enterprise events to correlation objects.
Figure 10 is a flow chart that illustrates example processing associated with determining whether a correlation rule completion exists.
Figure 11 is a flow chart that illustrates example processing based on analyzing an indicator produced by a root cause determiner.
Figure 12 is a flow chart that illustrates timer processing associated with example root cause determination.

### Detailed Description

Methods and systems associated with correlating root causes of system and enterprise events are now described with reference to the drawings, where like reference numerals are used to refer to like elements throughout. In the following description, for purposes of explanation, numerous specific details are set forth in order to facilitate thorough understanding. It may be evident, however, that correlating root causes can be practiced without these specific details. In other instances, well-known structures and devices are shown in block diagram form in order to simplify description.

### Introduction

Root cause analysis concerns identifying the underlying or base cause of a cluster of apparent problems in a complex enterprise computing environment by analyzing enterprise events, cause and effect relationships between enterprise components, the contexts from which events are generated, and rules relating the enterprise events. One example root cause analysis is performed by analyzing the completion status of a number of event correlation rules, which may be aggregated in correlation objects. The correlation rules facilitate modeling sets of cause and effect relationships that relate to diagnosing and distinguishing root cause events. Correlation rules may be populated by data extracted from events that are generated by enterprise components. When a sufficient number of the components of a correlation rule are filled, then the rule may be considered when determining a root cause. The components of a rule may be combined in methods including, but not limited to, Boolean operations like OR, AND, XOR, and NOT.

Events and correlation rules can be processed by a root cause determiner. When an event arrives at a root cause determiner, a timer can be initialized that determines a period of time during which related events will be collected. Once the period of time has expired, then a root cause determination can be made based on the set of collected events and correlation rules affected by such events.

Once a root cause is identified, an impact analysis can be performed. The impact analysis can examine enterprise events and proactively alert other potentially impacted enterprise components to the root cause, initiate failover processing, initiate maintenance processing, and/or alert operations staff, for example. Thus, the root cause determiner harnesses and applies the knowledge and experience of enterprise management operators.

Conventionally, event management systems are presented with substantially all enterprise events generated in an enterprise computing environment, making it more difficult to discern the root cause of a set of enterprise events. Thus, the methods and systems described herein facilitate filtering symptomatic events from root cause events to simplify enterprise management diagnoses and management. Filtering techniques include, but are not limited to, event reformatting and event suppression. Filtering reduces the number and frequency of events displayed, for example, at a console associated with an enterprise management system. Therefore, an operator employing the console for enterprise management functions will encounter a smaller, more focused problem space, leading to improvements in enterprise management.

In one example, software objects model enterprise components like agents, applications, devices, and data stores. Objects may have state and may, therefore, be in states including, but not limited to, a managed state, an expected state, and a maintenance state. Enterprise objects can participate in relationships. Thus, an enterprise object may be involved in a parent/child relationship, a master/slave relationship, a collaborating relationship, or a relationship that involves dependencies (e. g., a transaction pipeline) where such relationships facilitate modeling dependencies between enterprise components. Data structures that store dependency rules and correlation rules facilitate capturing relationships between objects.

Enterprise components can be organized into domains to facilitate collaborative root cause determinations. For example, a root cause determined for a first domain, when combined with a root cause determined for a second domain, may provide information concerning which of the domain root causes, if either, is an overarching root cause, or whether the ultimate root cause of a problem is a combination of root causes.

A root cause determiner receives events from the enterprise computing environment. Data retrieved from enterprise events can be used to populate event correlation rules. The root cause determiner receives the events, populates event correlation rules, correlates and aggregates the events, and after a sufficient number of events and/or after a sufficient period of time has elapsed, determines the root cause of related events. The root cause determiner can then report out the root cause event, reducing the number of events that are presented to a management station, console, and/or operator.

A root cause determining system can include an event log that stores received events and a root cause log that stores determined root causes. Logs can be employed to examine reasoning employed by a root cause determiner to facilitate understanding and/or adapting how a root cause determiner arrives at a root cause determination.

A root cause determining system may also include a GUI that will display data items including, but not limited to, correlation objects analyzed by a root cause determiner and determined root causes. When displaying a correlation object, the GUI can display statistics associated with the correlation object like, the number of events associated with the correlation object, the number of events considered by the correlation object, the time to maturity of a time period, candidate root causes associated with the correlation object, confidence levels in a candidate root cause, and data requirements for the correlation object. Similarly, when displaying a root cause, the GUI can display information including, but not limited to, an event context data, a correlation rule, a dependency data, a correlation object identifier, and a root cause determiner identifier.

Thus, to simplify and improve enterprise management through root cause determination, the methods, etc. described herein facilitate describing an enterprise computing environment (including relationships within an enterprise), defining cause and effect relationships between enterprise components, recognizing events that indicate a problem with an enterprise component, and identifying the most likely root cause event from potential root cause candidates.

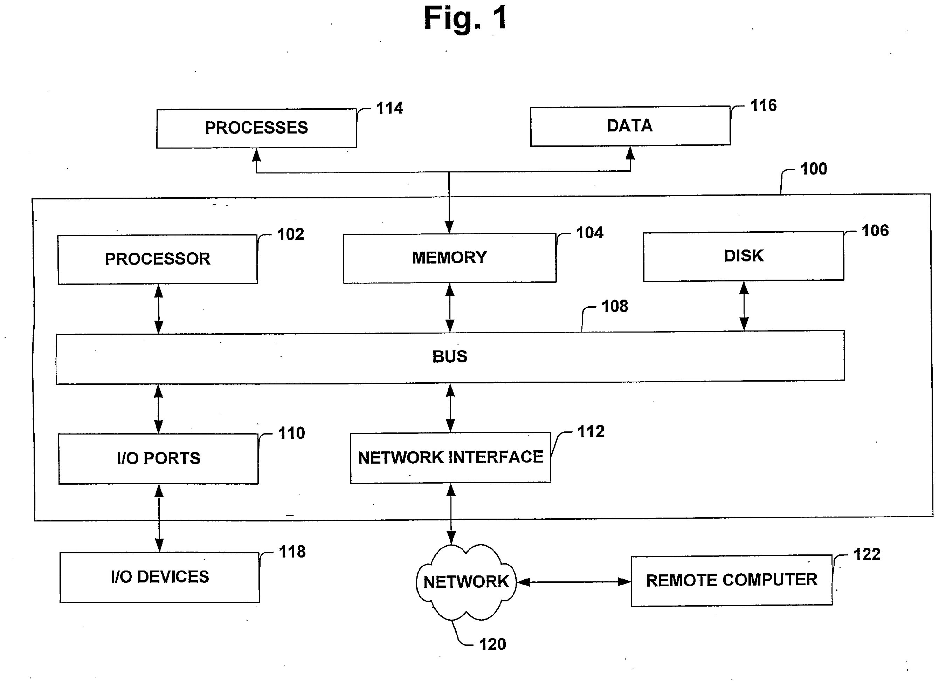

In order to provide a context for various aspects of the systems and methods described herein, Figure 1 and the following discussion provide a brief, general description of an environment in which example methods and systems can be implemented. While the general context of computer hardware and/or computer executable instructions is described, program modules executed by one or more computer components may also be implemented in combination with other program modules and/or as a combination of hardware and software. A "computer component" refers to a computer related physical and/or logical entity, either hardware, firmware, software, a combination thereof, or software in execution. For example, a computer component may be a process running on a processor, a processor, an object, an executable, a thread of execution, a program, a program image, and a computer. One or more computer components can reside within a process and/or thread of execution and a computer component can be localized on one computer and/or distributed between two or more computers. Program modules typically include, objects, programs, executable threads, data structures, etc. that perform particular tasks or implement data types.

The environment illustrated in Figure 1 is but one example of an environment in which the systems and methods can function. Well known computer systems and configurations that are suitable for the methods and systems include but are not limited to mainframes, microcomputers, microprocessor based systems, multi-processing systems, and distributed computing environments.

Figure 1 illustrates an example computer 100 that includes a processor 102, a memory 104, a disk 106, input/output ports 110, and a network interface 112 operably connected by a bus 108. The processor 102 can be a variety of various processors including dual microprocessor and other multi-processor architectures. The memory 104 can include volatile memory and/or non-volatile memory. The non-volatile memory can include, but is not limited to, read only memory (ROM), programmable read only memory (PROM), electrically programmable read only memory (EPROM), electrically erasable programmable read only memory (EEPROM), and the like. Volatile memory can include, for example, random access memory (RAM), synchronous RAM (SRAM), dynamic RAM (DRAM), synchronous DRAM (SDRAM), double data rate SDRAM (DDR SDRAM), and direct RAM bus RAM (DRRAM). The disk 106 can include, but is not limited to, devices like a magnetic disk drive, a floppy disk drive, a tape drive, a Zip drive, a flash memory card, and/or a memory stick. Furthermore, the disk 106 can include optical drives like, a compact disk ROM (CD-ROM), a CD recordable drive (CD-R drive), a CD rewriteable drive (CD-RW drive) and/or a digital versatile ROM drive (DVD ROM). The memory 104 can store processes 114 and/or data 116, for example. The disk 106 and/or memory 104 can store an operating system that controls and allocates resources of the computer 100.

The bus 108 can be a single internal bus interconnect architecture and/or other bus architectures. The bus 108 can be of a variety of types including, but not limited to, a memory bus or memory controller, a peripheral bus or external bus, and/or a local bus. The local bus can be of varieties including, but not limited to, an industrial standard architecture (ISA) bus, a microchannel architecture (MSA) bus, an extended ISA (EISA) bus, a peripheral component interconnect (PCI) bus, a universal serial (USB) bus, and a small computer systems interface (SCSI) bus.

The computer 100 interacts with input/output devices 118 via input/output ports 110. The input/output devices 118 can include, but are not limited to, a keyboard, a microphone, a pointing and selection device, cameras, video cards, displays, and the like. The input/output ports 110 can include but are not limited to, serial ports, parallel ports, and USB ports.

The computer 100 can operate in a network environment and thus is connected to a network 120 by a network interface 112. Through the network 120, the computer 100 may be logically connected to a remote computer 122. The network 120 may include, but is not limited to, local area networks (LAN), wide area networks (WAN), and other networks. The network interface 112 can connect to local area network technologies including, but not limited to, fiber distributed data interface (FDDI), copper distributed data interface (CDDI), ethernet/IEEE 802.3, token ring/IEEE 802.5, and the like. Similarly, the network interface 112 can connect to wide area network technologies including, but not limited to, point to point links, and circuit switching networks like integrated services digital networks (ISDN), packet switching networks, and digital subscriber lines (DSL).

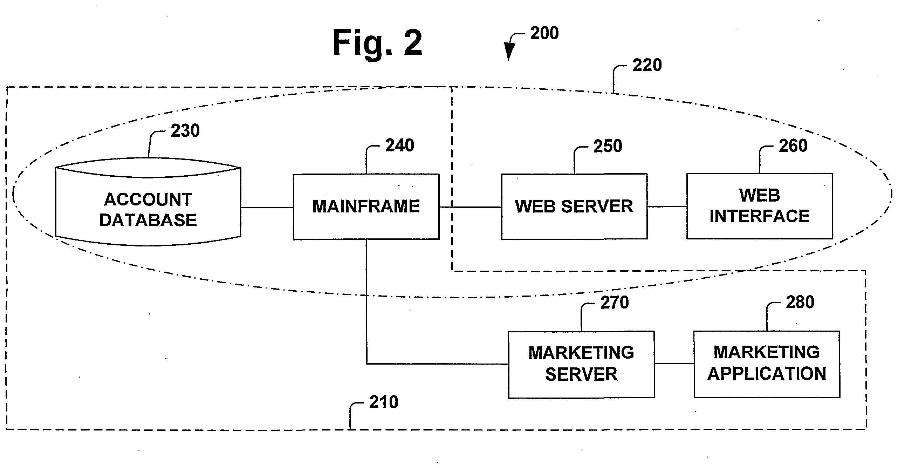

Turning now to Figure 2, two example transaction pipelines are illustrated. By way of illustration, a set 200 of enterprise components are arranged in two separate transaction pipelines. For example, a first transaction pipeline 220 includes an account database 230, a mainframe 240, a web server 250, and a web interface 260. Similarly, a second transaction pipeline 210 includes the account database 230, the mainframe 240, a marketing server 270, and a marketing application 280. The two transaction pipelines 210 and 220 both contain the account database 230 and the mainframe 240. Therefore, for enterprise events generated for either the account database 230 or the mainframe 240, enterprise events may be generated for the webserver 250, the web interface 260, the marketing server 270, and the marketing application 280.

The relationship between the enterprise components can be captured in cause and effect relationships. While there is no apparent connection between the web interface 260 and the marketing application 280, there are apparent relationships between the web interface 260 and the web server 250, and the marketing application 280 and the marketing server 270. Furthermore, there is a relationship between the mainframe 240 and the account data base 230, and other illustrated dependencies. Capturing and storing transaction pipelines in a cause and effect relationship data store facilitates distinguishing symptomatic events from root cause events. Furthermore, modeling dependencies facilitates performing impact analysis. For example, a problem with the web server 250 is likely to impact the web interface 260 while a problem with the marketing server 270 is likely to impact the marketing application 280. However, a problem with the web server 250 is not likely to cause a problem with the marketing application 280. However, a problem with the mainframe 240, is likely to cause problems with enterprise components 250, 260, 270, and 280.

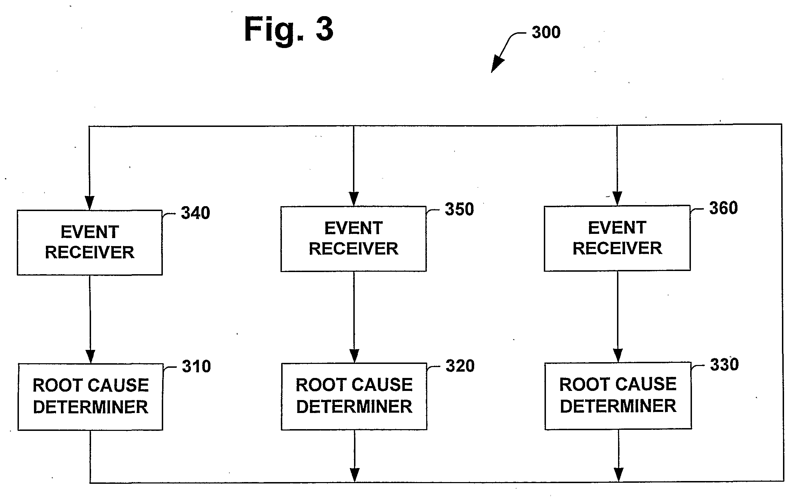

Figure 3 illustrates a collection 300 of root cause determiners. Root cause determiners generate root cause determinations based, at least in part, on events received at event receivers. Thus, root cause determiner 310 reaches a root cause determination based, at least in part, on events received at event receiver 340. Similarly, root cause determiner 320 interacts with event receiver 350 and root cause determiner 330 interacts with event receiver 360. By defining the set of enterprise events that can be received at event receivers 340, 350, and 360 to include root cause determinations made at other root cause determiners, the root cause determiners 310, 320, and 330 can participate in a network of root cause determiners. This facilitates producing flexible, dynamic, networks of root cause determiners providing advantages over conventional systems. Advantages include, but are not limited to, partitioning an enterprise into smaller domains and aggregating and correlating data from multiple enterprises. Furthermore, the flexibility facilitates failover processing between root cause determiners where if a first root cause determiner goes down, a second root cause determiner can perform the processing previously performed by the downed root cause determiner, which facilitates distributed enterprise management.

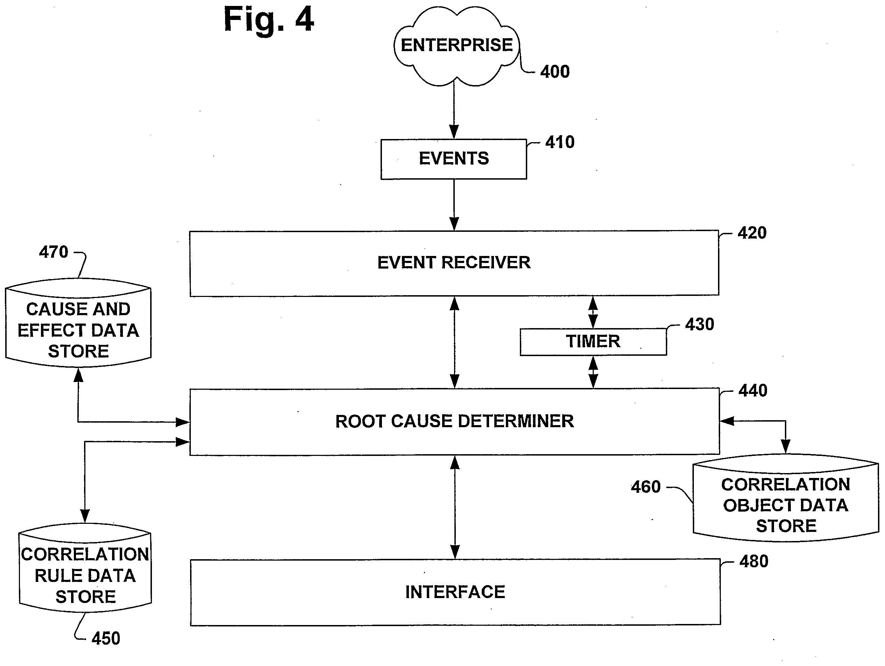

Figure 4 illustrates an example system for determining a root cause of an enterprise event. An enterprise 400 can include a variety of enterprise components, each of which may generate one or more types of enterprise events 410. One example system integrates with an enterprise monitoring system like that described in U.S. Patent No. 5,958,012. Events 410 are received by an event receiver 420, which can be a computer component as that term is defined herein. Whether events are passed from the event receiver 420 to a root cause determiner 440 can be controlled, at least in part, by the operation of a timer 430. The timer 430 defines a period of time during which related events 410 are anticipated. Under certain circumstances, events 410 that arrive outside of the period of time defined by the timer 430 may be presented to the root cause determiner 440 (e.g., root cause determination overriding event). The root cause determiner 440 determines a root cause for one or more enterprise events 410 by analyzing correlation objects that are stored, for example, in a correlation object data store 460. The correlation object data store 460 can be, for example, a stand-alone or distributed database, a data structure (e.g., file, array, database table), and the like. Correlation objects can comprise one or more correlation rules, and other information (e.g., correlation object identifier, time data, timer data).

The root cause determiner 440 has access to a correlation rule data store 450 that stores one or more correlation rules. The correlation rules stored in the correlation rule data store 450 can comprise, for example, a number of components for expressions that can be evaluated to determine whether a set of values associated with a set of enterprise events indicated a likely root cause for a problem for an entity in the enterprise 400. While a single correlation rule may provide a single data point for determining a root cause, aggregations of correlation rules collected in a correlation object can provide a set of data points that may provide a higher confidence level or a more sophisticated root cause determination. Thus, the correlation rules facilitate determining the root cause of an enterprise event. While examining enterprise events and/or correlation rules in isolation provides information useful to determining a root cause, a cause and effect data store 470 stores cause and effect relationships between two or more enterprise components, which facilitates producing combinations of datapoints. One example cause and effect data store 470 can store transaction pipeline dependency relationships. Two example transaction pipeline dependency relationships are illustrated in Figure 2 and discussion thereof is omitted here for the sake of brevity.

One example event receiver 420 receives events 410 from both an enterprise 400 and from a manual enterprise event provider (not illustrated). By way of illustration, events 410 may arrive across a computer network from an enterprise 400. Similarly, a stand-alone enterprise component may generate a signal that a human operator interprets as an enterprise event and subsequently provides to the event receiver 420. A stand-alone enterprise component may be, for example, a secure, off-site back-up system that is not connected to a network.

An interface 480 is illustrated in communication with the root cause determiner 440. One example interface 480 is a graphical user interface that facilitates displaying root causes determined by the root cause determiner 440 and/or information associated with the root cause determination (e.g., correlation objects employed in the determination, correlation rules completed in the determination, enterprise events, cause and effect relationships).

One example root cause determiner 440 examines the degree to which correlation rules associated with correlation objects stored in the correlation object data store 460 are completed. For example, the root cause determiner 440 can produce statistics concerning the number of correlation rules that are completed, and the complexity of the correlation rules that are completed, (e.g., three component correlation rule vs. twelve component correlation rule). Determining the degree to which correlation rules are completed and determining the type and complexity of completed correlation rules facilitates selecting correlation objects for further analysis in determining a root cause. Furthermore, determining the degree to which correlation rules are completed facilitates reconfiguring a time period established by the timer 430. For example, if 100% of the correlation rules are 100% completed, then the time period may be too long, since a valid root cause determination may be possible with less than 100% completion. Contrarily, if a small percentage (e.g., 5%) of the correlation rules are complete, then the time period established by the timer 430 may benefit from being lengthened to facilitate completing a higher percentage of correlation rules.

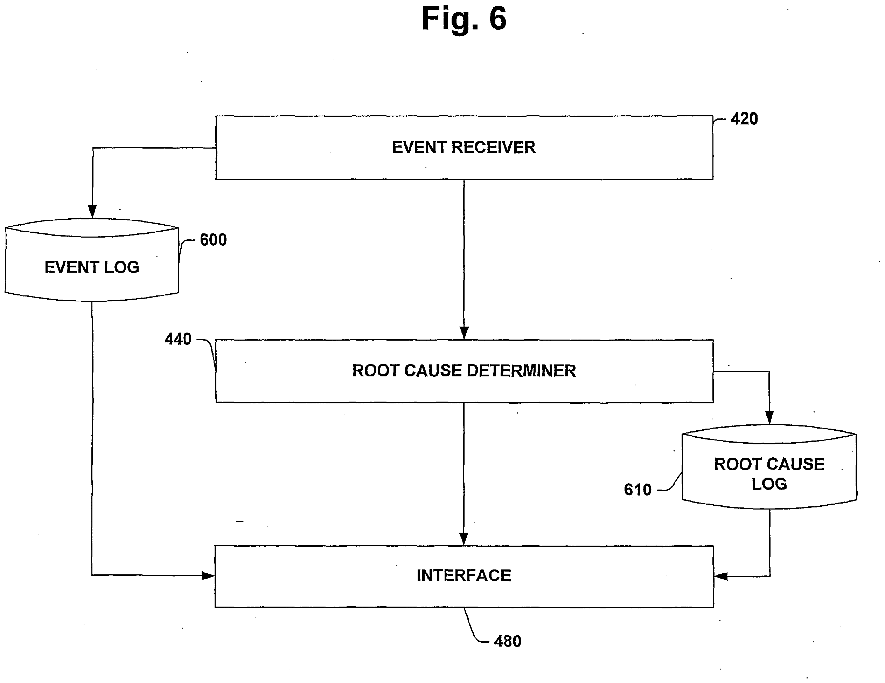

Given that more than one correlation rule may be complete, the root cause determiner 440 may, in one example, rank candidate root causes indicated by the completed correlation rules. After producing a ranking, the root cause determiner 440 may, in one example, accept a manual input from an operator to select the root cause. Manual operator inputs can be analyzed during a training period for the root cause determiner 440 to facilitate training the root cause determiner 440 how to automatically determine root causes from one or more candidate root causes. Thus, storing events in an event log 600 (Fig. 6), and storing determined root causes in a root cause log 610 (Fig. 6) while presenting candidate root causes on the interface 480 facilitates supervising machine learning that adapts root cause determiner 440 root cause selection algorithms.

Different enterprises may have different mixes of enterprise components that generate different mixes of enterprise events 410. Furthermore, different enterprises 400 may benefit from being managed from different points of view. Therefore, different sets of correlation rules may be stored in the correlation rule data store 450. To facilitate creating diverse correlation rules, one example system includes a correlation rule fabricator. A fabricator can include a graphical user interface that simplifies adapting existing rules and/or creating new rules. Similarly, different enterprises 400 may have different cause and effect relationships between different enterprise components and/or sets of enterprise components. Therefore, one example system includes a cause and effect relationship fabricator that facilitates defining cause and effect relationships that may be stored in the cause and effect data store 470.

An enterprise 400 may include more than one domain. Furthermore, multiple enterprises 400 may exist. In a multiple domain enterprise or in a multiple enterprise situation an ultimate root cause determination may be predicated on one or more initial root cause determinations made for separate domains and/or enterprises. Thus, one example system includes a root cause determination receiver (not illustrated) that accepts as input one or more root cause determinations from one or more root cause determiners 440. In one example, the root cause determination can be passed to a root cause determination receiver as an enterprise event, which facilitates flexibly creating dynamic networks of root cause determiners.

One example user interface 480 is a graphical user interface that includes a display and a selection device. The interface 480 provides for displaying a set of data entries on the interface 480 and employing the selection device to select from the set of data entries displayed on the display. The set of data entries can be retrieved from a variety of sources (e.g., event log 600, root cause log 610, correlation rule data store 450, correlation object data store 460, cause and effect data store 470). In one example interface 480, the set of data entries is limited to root cause determinations and correlation objects analyzed in arriving at root cause determinations. The interface 480 displays the set of data entries on the display and receives a data entry selection signal that indicates which of the displayed data entries has been selected by the selection device. In response to the data entry selection signal, the interface 480 can display additional data associated with the selected data entry. For example, if the data entry is a root cause determination, then the interface 480 can display additional information including, but not limited to, an event context data associated with the root cause determination, one or more correlation rules analyzed in arriving at the root cause determination, dependency data associated with enterprise components involved in the root cause determination, correlation object identifiers that identify correlation objects considered in arriving at the root cause determination, and a root cause determiner identifier that identifies a root cause determiner 440 employed in arriving at the root cause determination. Similarly, if the selected data entry is a correlation object, the interface 480 can provide additional data including, but not limited to, timer data associated with the timer 430, one or more pieces of data retrieved from the event log 600, an event log identifier that identifies an event log 600 storing enterprise events that participated in populating a correlation rule associated with the correlation object, correlation rules associated with the correlation object, dependencies, and correlation object statistics (e.g., number of events considered, number of correlation objects considered, number of correlation rules considered, number of correlation rules completed).

The interface 480 also presents information that facilitates adding, deleting, and/or suspending correlation objects. Furthermore, the interface 480 facilitates forcing a correlation by manually terminating the timer maturity clock.

The systems, methods and graphical user interfaces described herein may access a variety of data structures. One example data structure that may be stored on a computer readable medium is associated with a correlation object. A correlation object can include a variety of fields. One example set of fields includes a first field that stores an object identifier. The object identifier uniquely identifies an enterprise object from which an enterprise event was received. A second field stores an event message retrieved from the enterprise event. The event message may be copied directly from the enterprise event, or may be processed (e.g., parsed, pattern matched) before being stored in the second field. An example third field stores correlation rules to which the enterprise event applies. Thus, the correlation object aggregates correlation rules to facilitate efficient route cause determination. An example fourth field stores data associated with the degree to which the one or more correlation rules stored in the third field are completed. For example, the fourth field can store percentage data indicating what percent of the correlation rules have been completed and for the incomplete correlation rules the percent completion of such incomplete correlation rules. An example fifth field stores a time period during which enterprise events can be received. An example sixth field stores a root cause determiner identifier that uniquely identifies root cause determiners to which the data structure stored on the computer readable medium can be provided. Thus, the example sixth field facilitates constructing flexible, dynamic, networks of root cause determiners employed in enterprise management.

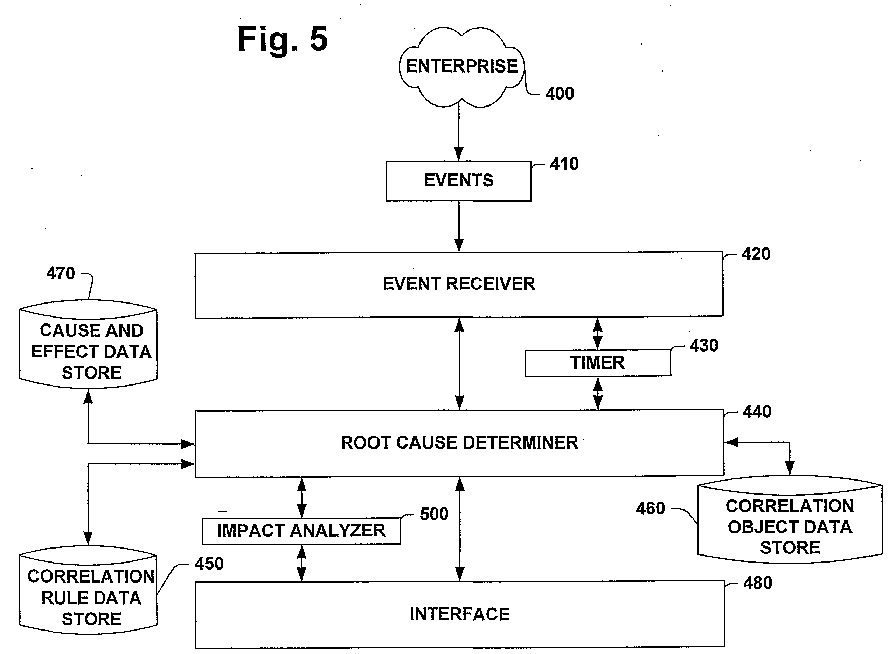

Figure 5 illustrates an example impact analyzer 500 in communication with the root cause determiner 440 and the interface 480. The impact analyzer 500 determines whether enterprise components other than the enterprise component associated with the root cause are likely to be affected by the problem determined to be the root cause. By way of illustration, downstream computer components are likely to be affected by a failure of an upstream computer component, while an upstream computer component is unlikely to be affected by the failure of a downstream computer component. For example, in an enterprise computing environment comprising a back-end banking application and a number of front-end automated teller machine (ATM) applications, the failure of a single ATM is unlikely to affect the back-end banking application, however, the failure of the back-end banking application is likely to affect a large number of the front-end ATM applications.

Thus, the impact analyzer 500 can perform actions including, but not limited to, notifying an affected enterprise component of the root cause and initiating impact processing associated with the affected enterprise component. An affected enterprise component could be notified through mechanisms including, but not limited to, an interrupt, a signal, a message, and an event. Similarly, the impact processing can include, but is not limited to, failover processing, restart processing, shut-down processing, security processing, and maintenance processing. Failover processing can be employed, in the banking/ATM example, to re-route ATM requests from the failed banking application to a back-up banking application, for example. Similarly, restart processing can be undertaken to attempt to restart the banking application. Shut-down processing may be undertaken, for example, to temporarily shut-down the ATM front-end applications to allow an opportunity to perform the restart and/or failover processing for the backend banking application. While the backend banking application is being failed over or restarted, security processing may be undertaken, for example, to limit the number and/or type of transactions that are available at the front end ATM applications. Furthermore, the impact analyzer 500 may schedule maintenance processing when it determines, for example, that although a banking application has not yet failed that it is likely to do so in the foreseeable future (e.g., disk approaching capacity).

Figure 6 illustrates an example event log 600 operably connected to (e.g., in electrical, physical, and/or data communication) with the event receiver 420. The event log data store 600 facilitates storing received enterprise events which in turn facilitates back-ups, determination recreation, and post solution machine learning. Having a log 600 of events considered by the root cause determiner 440 facilitates restarting and/or reperforming a root cause determination that is interrupted by, for example, the root cause determiner 440 going down. The event log 600 also facilitates post solution analysis of how the root cause determiner 440 came to its root cause determination. Post solution analysis facilitates reconfiguring and/or reprogramming the root cause determiner 440 to more accurately determine root causes. In one example, the event log 600 selectively stores received enterprise events to facilitate reducing the number of duplicate enterprise events stored. For example, in the banking/ATM example, a single ATM machine may report one thousand times that it has been unable to access the banking application. It is unlikely that each of the one thousand messages is necessary to facilitate determining the root cause. Thus, a first enterprise event from the ATM and selected subsequent messages (e.g., one message per quantum of time) may be stored in the event log 600 with other, duplicate messages not being stored.

Figure 6 also illustrates a root cause log data store 610 that stores determined root causes. Storing determined root causes in the root cause log data store 610 facilitates, for example, post solution analysis of how a root cause determination was made and scheduling delivery of root causes to downstream root cause determiners. Also, storing root cause determinations in the root cause log data store 610 facilitates training operators who will be tasked with enterprise management based on evaluating root cause determinations. A historical log of root causes can be employed to produce simulations that simplify training operators.

It is to be appreciated that the systems illustrated in Figures 4-6 can be implemented on one computer component and/or, on two or more distributed, cooperating, communicating computer components.

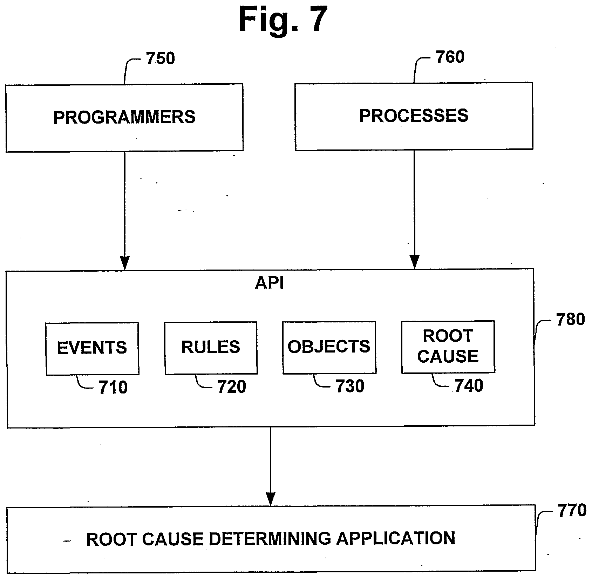

Referring now to Figure 7, in an example related to the invention, an application programming interface (API) 780 is illustrated providing access to a root cause determining application 770. The API 780 can be employed, for example, by programmers 750 and/or processes 760 to gain access to processing performed by and/or data employed by the application 770. For example, a programmer 750 can write a program to access events 710, rules 720, objects 730, and/or root causes 740 employed by and/or produced by the root cause determining application 770. Employing a root cause determining program 770 is facilitated by the presence of the API 780 since a programmer 750 does not have to understand the internal operation of the root cause determining application 770. The programmer 750 merely has to learn the interface 780 to the application 770. This facilitates encapsulating the functionality of the application 770 while exposing that functionality. Similarly, the API 780 can provide data values to the root cause determining application 770 and/or retrieve data values from the application 770. For example, a process 760 that retrieves rules 720 can provide rules 720 to the application 770 via the API 780. While a root cause determining application 770 is illustrated, it is to be appreciated that the API 780 can provide an interface to root cause determining systems and/or methods.

Thus, in one example of the API 780, a set of application program interfaces can be stored on a computer readable medium. The interfaces can be executed by a computer component to gain access to a root cause determining system and/or method. Interfaces can include, but are not limited to, a first interface that receives enterprise events, a second interface that receives correlation rules associated with the enterprise events, a third interface that receives correlation objects comprising correlation rules that include the correlation rule received by the second interface, and a fourth interface that returns a root cause of an enterprise event.

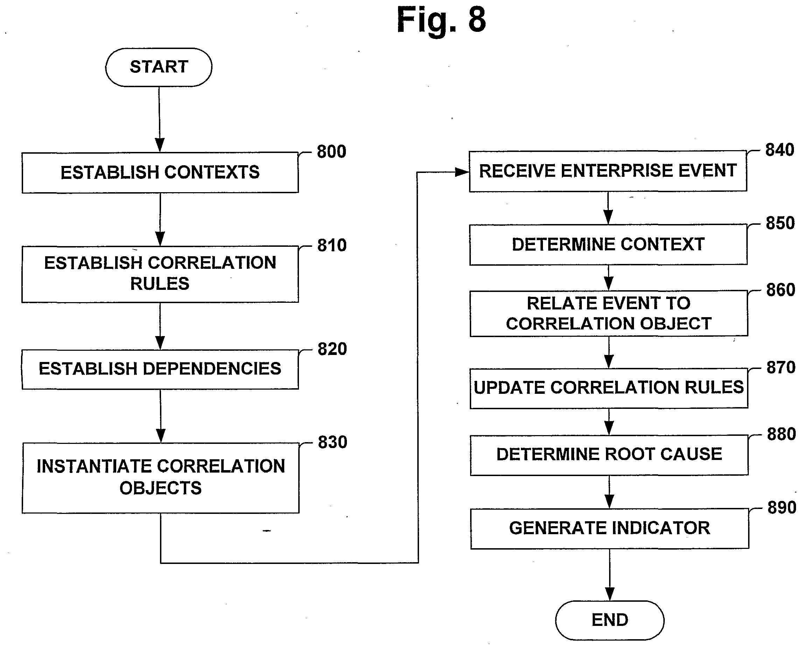

In view of the exemplary systems shown and described herein, implemented methodologies are better appreciated with reference to the flow diagrams of Figs. 8 through 12. While for purposes of simplicity of explanation the illustrated methodologies are shown and described as a series of blocks, it is to be appreciated that the methodologies are not limited by the order of the blocks. Some blocks can occur in different orders and/or concurrently with other blocks from that shown and described. Moreover, not all the illustrated blocks may be required to implement an example methodology and additional and/or alternative methodologies may employ additional blocks that are not illustrated.

Some methodologies may be implemented by computer executable instructions and/or operations stored on computer readable media including, but not limited to, application specific integrated circuits (ASIC), compact discs (CD), digital versatile disks (DVD), random access memory (RAM), read only memory (ROM), programmable read only memory (PROM), electronically erasable programmable read only memory (EEPROM), disks, carrier waves, and memory sticks.

Referring now to Figure 8, an example computer implemented method for managing an enterprise computing environment is flow-charted. An example enterprise computing environment can include a number of enterprise components modeled by enterprise objects. An enterprise component can be, for example, a program, a thread, a process, a networking component (e.g., router, repeater, bridge, gateway), a computer (e.g., mainframe, minicomputer, personal computer, server, hand-held, laptop), and other communications equipment (e.g., cellular telephone, pager, personal digital assistant (PDA)). An enterprise object includes software that abstracts and models enterprise components for which enterprise events can be generated.

Enterprise components can be arranged in dynamic, complex networks. When one enterprise component experiences a problem (e.g., an application goes down), related components may also experience problems. For example, a transaction processing system that employs the application that is down may not be able to respond to user queries.

When enterprise components experience problems, they can generate and report enterprise events. An enterprise event can take many forms, typically including a text message identifying a problem with an enterprise component and one or more identifiers that uniquely identify the enterprise event and the enterprise component experiencing the problem. Enterprise events may also include information like, the duration of a problem, the time at which the problem was first noticed, the time at which the enterprise event was generated, the time at which the enterprise event was reported, and data values associated with the problem (e.g., temperature = 85 degrees). Thus, correlating and determining root causes of enterprise events includes receiving and processing a variety of enterprise events in a variety of formats.

Since both the enterprise component that experienced the initial problem and related enterprise components will be generating and reporting enterprise events, the method flow charted in Figure 8 facilitates separating symptomatic enterprise events and root cause enterprise events.

At 800, the methodology establishes a set of contexts from which an enterprise event can be generated and/or viewed. Rules for determining a context may differ from enterprise to enterprise as determined by a rule programmer, for example, and may vary within an enterprise depending on the point of view of the enterprise (e.g., an application-centric view, a hardware-centric view, a business process-centric view). A context may be captured by a set of enterprise aware rules that correlate enterprise events into related sets of events and thus facilitate filtering a large volume of events down to a smaller set of events. One example of a context is a transaction pipeline, which is a linked set of dependent enterprise components and/or objects employed for transaction processing.

At 810, a set of correlation rules that facilitate determining whether an enterprise event identifies a root cause are established. The correlation rules can, in one example, include Boolean expressions concerning enterprise event data. As enterprise events are received according to the method, the component parts of the Boolean expression are populated by data retrieved from the enterprise events. Thus, the Boolean expression, if completed, can be evaluated to determine whether a logical true result is indicated for the correlation rule established at 810, and thus whether the completed correlation rule provides direction to determining a root cause. Other example correlation rules can produce a value even if less than 100% of the data that can be employed by a rule is present in the rule. For example, a rule x = A or B or (C and D) can be evaluated in some cases with only the value for A or B.

At 820, a set of dependencies between two or more enterprise components is established. Dependencies facilitate determining whether an enterprise event identifies a root cause by modeling cause and effect relationships. Identifying the cause and effect relationships that exist in an enterprise simplifies searching for expected events and ignoring unrelated events. For example, if an enterprise component A relies on an enterprise component B, and an enterprise event is received from enterprise component A, then a dependency established at 820 facilitates searching for enterprise events from enterprise component B, and facilitates ignoring enterprise events from enterprise component C while determining whether there is an upstream root cause (e.g., problem with entity B) for the problems experienced at enterprise component A.

Since an enterprise computing environment can include a complicated network of enterprise components with a large number of cause and effect relationships, establishing a root cause for a problem with an enterprise component may involve analyzing a number of related correlation rules. At 830, a correlation object is instantiated to facilitate aggregating related correlation rules. As enterprise events arrive, they are routed to correlation objects that house related correlation rules that determine a root cause. Aggregating correlation rules into correlation objects facilitates, for example, parallel processing of correlation rules in separate correlation objects and thus facilitates reducing processing time associated with enterprise management. Therefore, root cause events are determined more quickly than in conventional single processing systems.

At 840, the methodology receives an enterprise event. Enterprise events can be generated and reported from a variety of enterprise components. Thus, the enterprise event may be in one of a variety of enterprise event formats. Since separate enterprise monitors may be tasked with monitoring an enterprise computing environment from different points of view (e.g., hardware, software, business process), at 850, the context from which the enterprise event was received and is to be viewed is determined. Determining the context from which the enterprise event was generated, and thus determining the point of view from which it should be analyzed, facilitates routing the enterprise event to one or more correlation objects and/or root cause determiners. Such multiple routing facilitates parallel processing for multiple monitors.

At 860, the enterprise event is related to one or more correlation objects. The enterprise event can be related to the correlation object by, for example, examining component parts of correlation rules associated with correlation objects to determine whether data retrieved from the enterprise event can be used to populate one or more fields or component parts of rules. If the enterprise event is related by data to a correlation rule associated with a correlation object, then, at 870, the correlation rule can be updated. For example, if the correlation rule has five enterprise event data components that are part of a Boolean expression, and the enterprise event data is one of the five components, then a value for the enterprise event data can be determined and the Boolean expression in the correlation rule can be updated with the value. Furthermore, the correlation object, and/or the correlation rule, can be updated to reflect the degree to which the Boolean expression is complete. By way of illustration, a data value that records the number of components of a Boolean expression and the number of populated components of the Boolean expression can be updated. Such completion data can control, for example, whether a correlation rule is applied to root cause determination.

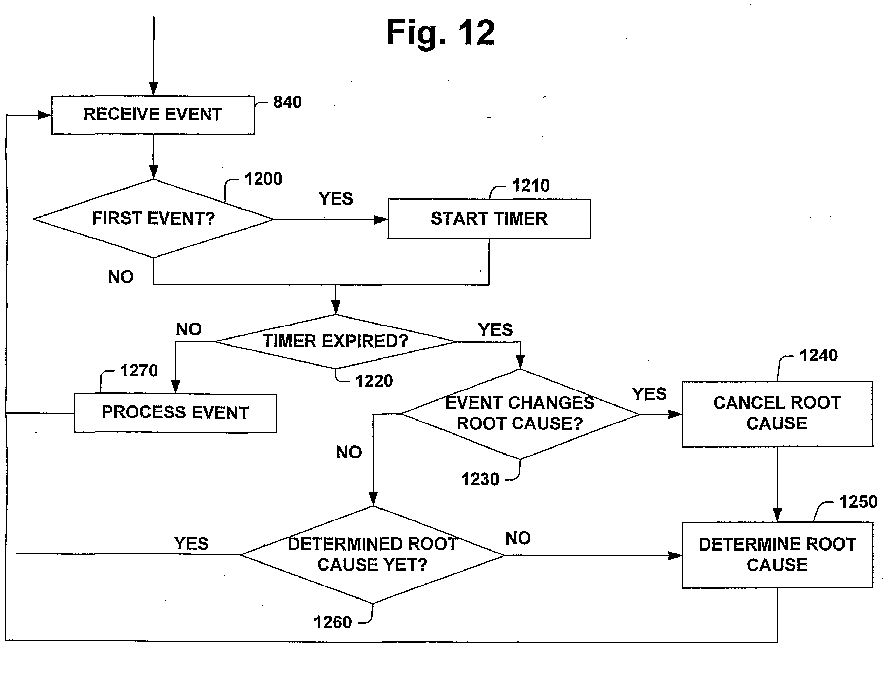

Blocks 840 through 870 can be contained within a loop that may be controlled by a timer as described in association with Figure 12, for example. Thus, the set of blocks 840 through 870 may be repeated one or more times while a set of enterprise events is presented to the methodology. At a later point in time, under programmatic control (e.g., a timer expiring, a predetermined, configurable number of events being received), the loop is exited, and at 880 a root cause is determined. Determining the root cause is based on at least one of the context from which the event was generated, the set of correlation rules established at 810 and updated at 870, the set of dependencies established at 820, and one or more sets of enterprise events related to the correlation objects instantiated at 830 and updated at 860. For example, correlation objects with completed correlation rules can be analyzed to determine whether, and how many correlation rules produced a Boolean true value. If one or more correlation rules produced Boolean true values, then determining a root cause involves selecting between the correlation objects that have one or more correlation rules reporting a true value. The selection can be made by techniques including, but not limited to, ranking, neural network techniques, pattern matching techniques, and linear programming. While the correlation rules have been described in the context of Boolean expressions producing logical values (e.g., true, false), it is to be appreciated that the correlation rules can take other forms (e.g., functions, relations) and are not limited to Boolean expressions.

At 890, an indicator associated with the root cause is generated. The indicator can be, for example, a message, an enterprise event, an interrupt, a signal, or an object. The indicator can control post-solution activity (e.g., scheduling maintenance, failover processing, initiating impact analysis).

Thus, Figure 8 illustrates an example method for managing an enterprise computing environment. The method includes pre-establishing rules, contexts, and dependencies that facilitate providing a framework in which enterprise events that are received from enterprise components can be evaluated. Once enterprise components experience problems and begin generating and reporting enterprise events, the method receives the events, relates them to correlation rules, updates correlation objects that aggregate correlation rules and ultimately determines a root cause of the set of related enterprise events. The root cause determination facilitates understanding what actions, if any, should be taken based on the root cause determination. The indicator generated by the method can be evaluated to facilitate performing appropriate enterprise computing environment management functions.

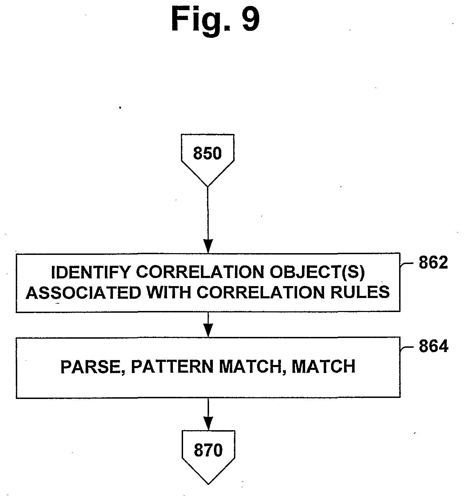

Referring now to Figure 9, a flow chart illustrates an example of relating an enterprise event to one or more correlation objects. Relating an enterprise event to a correlation object includes, at 862, identifying correlation objects associated with correlation rules to which the enterprise event applies. For example, a correlation rule may have a number of components in an expression. The components may reflect values available from an enterprise event. Thus, an enterprise event can be related to a correlation rule by data based on whether the enterprise event provides a value for a component of a correlation rule expression.

Determining whether a correlation rule is related to an enterprise event can involve, at 864, parsing enterprise event text fields to determine whether there is text that can populate a correlation rule expression component. Similarly, at 864, enterprise event fields can be pattern matched with correlation rule expression components to determine whether the enterprise event contains data that can populate a correlation rule expression component. Furthermore, unique identifiers in enterprise events can be examined to determine whether the enterprise event contains data that can populate a correlation rule expression component.

While parsing, pattern matching and identifier matching are illustrated at 864, it is to be appreciated that other determining methods can be employed. If a determination is made that an enterprise event has data that can populate a correlation rule expression component, then the data can be extracted from the enterprise event to facilitate updating the correlation rule with a value determined from such data.

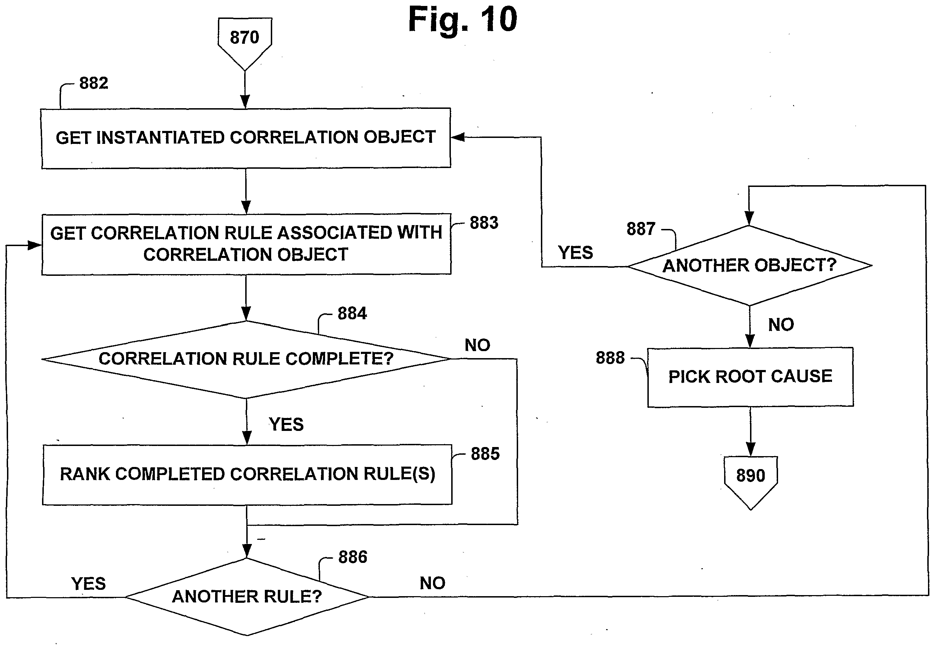

Figure 10 illustrates one example method for determining a root cause. The example method examines the degree to which correlation rules are complete, and ranks completed correlation rules. At 882, an instantiated correlation object is retrieved, for example, from a correlation object data store. Recall that each of the correlation objects are associated with enterprise events that include data related to correlation rules associated with respective correlation objects. At 883, correlation rules associated with the correlation object retrieved at 882 are acquired. A correlation object may comprise, for example, one or more correlation rules. A correlation rule facilitates identifying enterprise components and/or enterprise events generated by enterprise components that share a relationship. One example correlation rule format includes an identifier that uniquely identifies a rule and a maturity time, which is a period from when a first enterprise event occurs until the correlation root cause has matured (e.g., a time in which it is reasonable to assume that substantially all enterprise events related to the first enterprise event have arrived). The example correlation rule format can also include a "transaction pipeline" field that can be, for example, a list of enterprise components and events that indicate their failure. The example correlation rule format can also include a "correlated event to generate" field that defines an enterprise event to generate if the correlation rule is completed and produces a value indicating that the correlation contributes to identifying a root cause. A correlated event to generate can include a field that has text and/or data extracted from one or more enterprise events.

The example correlation rule format can also include a "destination event manager" field that can be, for example, a list of root cause determiners and/or event managers to which the correlated event described in the previous field can be sent. This facilitates establishing networks of root cause determiners that are responsible for various domains within an enterprise, which in turn facilitates parallel processing and localization of root cause determinations. The example format can also include a "time before deleted" field that describes a time after which it is reasonable to conclude that substantially all events related to the first received enterprise event have been processed. Correlation rules can be dynamic, and thus formats may change over time.

If an enterprise component is modeled by an enterprise object, then a correlation rule may contain fields like an "object identifier" field that facilitates uniquely identifying the enterprise object. Similarly, the rule may include an "object description" field. Objects simplify establishing, and maintaining state for an enterprise component. Thus, an enterprise object can have a state that may be examined to determine whether an enterprise component that is determined to be a root cause is in a state that affects the action to be taken upon the determination that the enterprise object is the root cause. For example, an enterprise object that is in a "maintenance" state may be expected to be the root cause of a number of enterprise events, however, the actions taken based on the "maintenance" state of the enterprise object are likely to differ from the actions taken if the enterprise object had an expected state of "running". By way of illustration, if the enterprise object state was expected to be "running", then actions taken upon determining that the enterprise object was a root cause might include failover processing. However, if the enterprise object state is "maintenance", then the action taken might be to inform downstream objects to wait for a period of time sufficient to complete the maintenance before reporting any other enterprise events associated with the enterprise object in the "maintenance" state.

At 884, a determination is made concerning whether a correlation rule is complete. By way of illustration, a correlation rule may have four components that are logically 'anded' together to produce a Boolean true or false value. As described above, values for correlation rule components can be extracted from enterprise event data fields. If the determination at 884 is yes, then at 885, the completed correlation rule is ranked to facilitate comparison to other completed correlation rules. Rankings can be based, for example, on relative location in a transaction pipeline.

At 886, a determination is made concerning whether there is another rule to examine. If the determination is yes, processing returns to 883. If the determination is no, processing proceeds to 887, where a determination is made concerning whether there is another correlation object to process. If the determination at 887 is yes, processing returns to 882. If the determination is no, processing proceeds to 888 where a root cause is chosen. The choice may be made, for example, by examining the set of ranked completed correlation rules and selecting the highest ranked rule. However, other techniques for choosing the root cause can include, but are not limited to, manual selection, pattern matching, and neural network techniques.

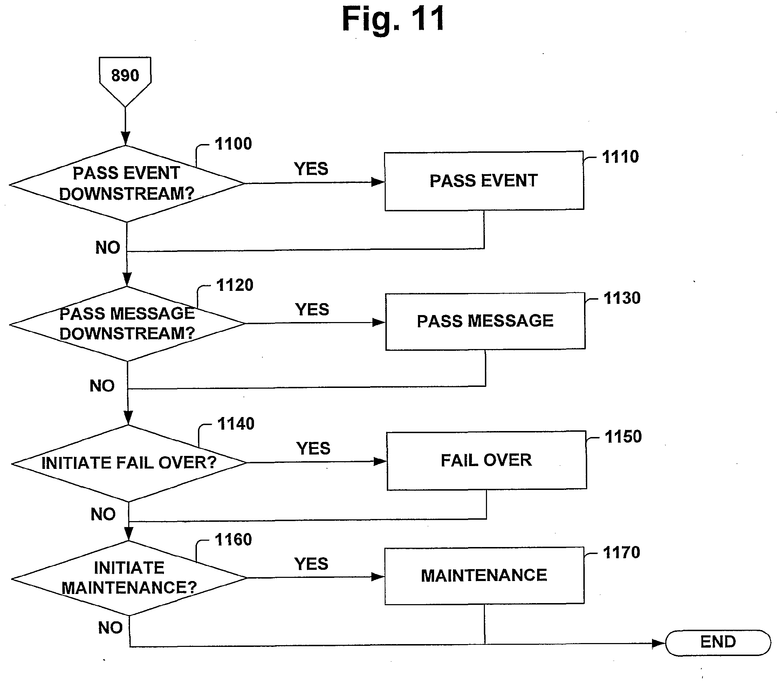

Turning now to Figure 11, additional processing associated with a computer implemented method for correlating and determining root cause events is flow charted. The processing may be selectively performed based, for example, on the indicator produced at 890 (Figure 8).

At 1100, a determination is made concerning whether to pass an event downstream. By way of illustration, in a network of root cause determiners, a root cause determined for a first domain may be passed along to other root cause determiners to facilitate collaborative root cause determining. Therefore, the indicator produced at 890 may indicate that the root cause determined by the method should be passed to other root cause determiners. If the determination at 1100 is yes, at 1110, an enterprise event will be passed to other methods, and/or systems employed in root cause determining. At 1120, a determination is made whether to pass a message downstream. A message can be passed, for example, to a console application and/or an operator. If a root cause determination triggers an automated process to resolve the root cause (e.g., restart a halted process), then there may be limited purpose in informing an operator that a restart has occurred. However, if a root cause determination requires the attention of an operator, then a message may be displayed for the operator. Thus, if the determination at 1120 is yes, at 1130, a message will be passed downstream.

At 1140, a determination is made concerning whether to initiate failover processing. By way of illustration, if one disk in a redundant array of independent disks fails but there remain a sufficient number of independent disks to perform the fault tolerance functions of the redundant array, then failover processing may not be required. However, if a number of the independent disks in the redundant array have failed so that the fault tolerance feature is threatened, then processing that removes one or more of the failed independent disks from the redundant array and inserts a different independent disk into the redundant array may be undertaken. Therefore, if the determination at 1140 is yes, at 1150, failover processing can be initiated.

At 1160, a determination is made concerning whether to initiate maintenance processing. For example, the root cause determination of 880 and the indicator of 890 may indicate that a disk is approaching a threshold value associated with disk fragmentation. Since different disks may be affected and/or fail at different levels of disk fragmentation, a skilled operator may selectively perform maintenance at different levels of disk fragmentation. Therefore, the method can be configured to automatically initiate maintenance based on the root cause determination of 880 and the indicator generated at 890. Thus, if the determination at 1160 is yes, maintenance processing can be initiated at 1170.

Referring now to Figure 12, a flow chart illustrates processing associated with limiting the time period during which enterprise events are collected prior to determining a root cause. A method for root cause determining can benefit from limiting the period of time during which potentially related enterprise events are collected by allocating enough time to collect a meaningful set of enterprise events while placing a reasonable limit on the potentially lengthy response time for responding to an enterprise event.

At 840 an enterprise event is received. At 1200, a determination is made concerning whether the event is the first event related to an enterprise event problem. If the determination at 1200 is yes, then at 1210 a timer is started. The period for which the timer will run is a configurable time that can be set by an operator of the enterprise computing environment managing system. For large enterprises and/or domains the timer may be set to a first period, while for smaller enterprises and/or domains the timer may be set to a shorter second period, for example. Similarly, enterprises in which there are long dependency chains may benefit from longer timer periods, while enterprises in which there are relatively simple dependencies may benefit from shorter timer periods.

At 1220 a determination is made concerning whether a timer period associated with an enterprise event or set of related enterprise events has expired. If the determination at 1220 is no, then at 1270 the enterprise event is processed. Processing can include, but is not limited to, logging the enterprise event, updating a correlation rule to which the event applies, and the like. If, however, the determination at 1220 is yes, then at 1230 a determination is made concerning whether the received enterprise event is likely to change a root cause determination made after the expiration of the timer. The determination made at 1230 assumes that upon the expiration of a timer that a root cause determination will be made, as, for example, at 1250. If the determination at 1230 is no, then at 1260 a determination is made concerning whether a root cause has been determined for the set of enterprise events collected between the starting and the expiration of the timer. If the determination at 1260 is yes, then processing returns to 840. If, however, the determination at 1260 is no, then at 1250 the root cause is determined. Determining the root cause at 1250 can be performed by methods and/or apparatus described herein.

If the determination at 1230 is yes, that although the timer has expired at 1220 the enterprise event received at 840 is likely to change a root cause previously determined at 1250, then, at 1240, the root cause previously determined is cancelled. Thereafter, at 1250, a root cause is redetermined. By way of illustration of an event that is likely to change the determination of a root cause, consider a set of enterprise events received from a web based application with thousands of users accessing a single database through a gateway. If the database goes down, it is likely that the web browsers and/or client applications associated with the web based application are likely to generate numerous enterprise events indicating that the gateway did not respond. A large volume of enterprise events could easily overwhelm the bandwidth for an enterprise computing environment thereby preventing the transmission of an enterprise event generated by the database. Upon receipt of the first enterprise event from a client application, a timer may be started. During the pendency of the timer, a large number (e.g., 10,000) enterprise events from client applications may be received. However, the enterprise event generated by the database as it went down may not be received. It may, for example, be queued in a router awaiting delivery to the event managing system. Then, after the timer expires, the enterprise event associated with the database going down could be received. Given 10,000 enterprise events indicating that a gateway is not responding and one late arriving enterprise event indicating that the database from which the gateway has been trying and failing to read went down, a determination made from the 10,000 gateway related enterprise events is easily overridden by the enterprise event associated with the database going down.

It is to be appreciated that the methods described herein for determining a root cause can be performed on a single computer component and/or be distributed between two or more cooperating, communicating computer components. It is to be further appreciated that the methods described herein may be performed, where possible, in parallel by multiple computer components.

Once a root cause is determined, one example method for enterprise component management performs impact analysis. Impact analysis concerns determining which, if any, enterprise components are likely to be impacted by the problem that initiated the enterprise events that led to the root cause determination. By way of illustration, an enterprise that includes a security server, secure and insecure back-end applications, and secure and insecure front-end applications may benefit from an impact analysis of the security server going down. For example, neither the insecure back-end nor insecure front-end applications are likely to be impacted by the security server going down, however, both the back-end secure applications, and the secure front-end applications, are likely to be impacted. Therefore, impact analysis may lead to identifying the enterprise components that should be informed, disabled, and/or the like, based on the root cause determination that the security server has gone down.

What has been described above includes several examples. It is, of course, not possible to describe every conceivable combination of components or methodologies for purposes of describing the systems and methods employed in correlating and determining root causes of system and enterprise events. However, one of ordinary skill in the art may recognize that further combinations and permutations are possible. Accordingly, this application is intended to embrace alterations, modifications, and variations that fall within the scope of the appended claims. Furthermore, to the extent that the term "includes" is employed in the detailed description or the claims, the term is intended to be inclusive in a manner similar to the term "comprising" as that term is interpreted when employed as a transitional word in a claim.

## Claims

1. A computer implemented method for enterprise component management, comprising:
establishing a set of components from which an enterprise event can be generated;
establishing (810) a set of correlation rules that facilitate determining whether an enterprise event identifies a root cause;
establishing (820) a set of cause and effect relationships between two or more enterprise components to facilitate determining whether an enterprise event identifies a root cause, where the cause and effect relationships relate to two or more enterprise components;
instantiating (830) one or more correlation objects to facilitate aggregating related correlation rules based on the set of cause and effect relationships;
receiving (840), at an event receiver (420), an enterprise event including event data associated with the enterprise event;
determining that the enterprise event is to be passed to a root cause determiner (440);
passing the enterprise event to the root cause determiner (440) and analysing correlation objects stored in a correlation object data store (460);
determining (850) a transaction pipeline from which the enterprise event was generated, the transaction pipeline including a linked set of dependent enterprise components and/or objects;
identifying (860) one or more correlation objects associated with the received enterprise event and retrieving the aggregated related correlation rules associated with the identified one or more correlation objects;
updating (870) one or more of said retrieved correlation rules, by populating component parts of the one or more correlation rules with received event data associated with the enterprise event;
identifying updated correlation rules that can be evaluated with the populated event data and after a certain number of enterprise events have been received or when a time period has elapsed, determining (880), by a first root cause determiner, a root cause based on at least one of the identified updated correlation rules that can be evaluated and on the determining of components from which the event was generated, wherein determining the root cause comprises
retrieving (882) an instantiated correlation object from the one or more instantiated correlation objects,
retrieving (883) correlation rules associated with the retrieved instantiated correlation object,
examining a retrieved correlation rule by determining (884) that a correlation from the retrieved correlation rules is complete, and ranking (885) completed correlation rules based on relative location in the transaction pipeline,
determining (886) if there is another correlation rule to examine,
upon determining that there are no other correlation rules to examine, determining (887) whether there is another correlation object to process,
upon determining that there are no other correlation objects to process, selecting (888) a completed rule as the root cause based on the ranking;
generating (890) an indicator associated with the root cause
determining (1100) that the generated indicator should be passed to another route cause determiner; and
passing (1110) the determined indicator to the another root cause determiner as another enterprise event.

2. The method of claim 1, wherein populating component parts of the one or more correlation rules to which the enterprise event applies comprises parsing one or more text fields of the received event data associated with the enterprise event, and matching said one or more text fields of the received event data with respective text fields of the identified one or more correlation rules.

3. The method of claim 1, wherein a plurality of updated correlation rules that can be evaluated with the populated event data are identified, and wherein determining a root cause comprises selecting between said plurality of identified updated correlation rules.

4. The method of claim 1, further comprising performing impact analysis to identify other enterprise components potentially impacted by the identified the root cause.

5. The method of claim 1, where based on the indicator an event is passed to a downstream component.

6. The method of claim 1, where based on the indicator a message is passed to a downstream component.

7. The method of claim 1, where based on the indicator one or more fail over processes are run.

8. The method of claim 1, where based on the indicator one or more maintenance processes are run.

9. The method of claim 1, where the computer implemented method is performed by a single computer component.

10. The method of claim 1, where the computer implemented method is performed by two or more computer components.

11. The method of claim 1, comprising:
initiating a timer that measures a time period during which enterprise events that will be analyzed in determining a root cause are collected; and
delaying determining a root cause until after the timer has run out.

12. The method of claim 11, further comprising receiving an enterprise event after the timer has expired and determining if the enterprise event received after the timer has expired is likely to change the determined root cause, wherein if it is determined that the enterprise event received after the timer has expired is likely to change the determined root cause, the root cause determined from the set of enterprise events collected during the running of the timer is cancelled and a new root cause is determined.

13. A computer readable medium storing computer executable instructions for performing the method of any one of claims 1 to 12 when the instructions are executed by a computer.

14. A system for determining a root cause of an enterprise event, comprising:
enterprise event receiver means (420) for receiving an enterprise event including event data associated with the enterprise event;
correlation rule data store (450) for storing one or more correlation rules that facilitate determining the root cause of an enterprise event;
cause and effect data store (470) for storing one or more cause and effect relationships that facilitate determining the root cause of an enterprise event, where the cause and effect relationships relate to two or more enterprise components, wherein the cause and effect data store (470) is arranged to store one or more transaction pipeline dependency relationships;
correlation object data store (460) for storing one or more correlation objects associated with one or more candidate root causes, where the correlation objects comprise one or more related correlation rules that are aggregated based on the set of cause and effect relationships;
root cause determiner means (440) for determining the root cause for one or more enterprise events by:
identifying (860) one or more correlation objects associated with the received enterprise event and retrieving the aggregated related correlation rules associated with the identified one or more correlation objects;
updating (870) one or more of said retrieved correlation rules, by populating component parts of the one or more correlation rules with received event data associated with the enterprise event; and
identifying updated correlation rules that can be evaluated with the populated event data and after a certain number of enterprise events have been received or when a time period has elapsed, determining a root cause based on at least one of the identified updated correlation rules that can be evaluated and on the determining of components from which the event was generated, wherein determining the root cause comprises
retrieving (882) an instantiated correlation object from the one or more instantiated correlation objects,
retrieving (883) correlation rules associated with the retrieved instantiated correlation object,
examining a retrieved correlation rule by determining (884) that a correlation from the retrieved correlation rules is complete, and ranking (885) completed correlation rules based on relative location in the transaction pipeline,
determining (886) if there is another correlation rule to examine,
upon determining that there are no other correlation rules to examine, determining (887) whether there is another correlation object to process,
upon determining that there are no other correlation objects to process, selecting (888) a completed rule as the root cause based on the ranking,
generating (890) an indicator associated with the root cause; and
interface means (480) for presenting the determined root cause,
wherein the root cause determiner is further adapted to determine (1100) that the generated indicator should be passed to another route cause determiner, and pass (1110) the determined indicator to the another root cause determiner as another enterprise event.

15. The system of claim 14, where the enterprise event receiver (420) is arranged to receive one or more enterprise events from at least one of one or more enterprise components and a manual enterprise event provider.

16. The system of claim 14, further comprising impact analyzer means (500) for determining whether enterprise components other than the enterprise component associated with the root cause are likely to be affected by the root cause of an enterprise event.

17. The system of claim 16, where the impact analyzer means (500) is arranged to selectively perform at least one of notifying an affected enterprise component of the root cause, and to initiate impact processing associated with the affected enterprise component.

18. The system of claim 17, where the impact analyzer means (500) is arranged to perform impact processing comprising at least one of failover processing, restart processing, shut-down processing, security processing, and maintenance processing.

19. The system of claim 15, comprising an event log data store (600) for storing received enterprise events.

20. The system of claim 19, wherein the event log data store (600) is arranged to selectively store received enterprise events, where the selection is made based on the uniqueness of an enterprise event to facilitate reducing storage requirements by reducing the number of duplicate enterprise events stored.

21. The system of claim 14, comprising a root cause log data store (610) for storing determined root causes.

22. The system of claim 14, where the root cause determiner (440) is arranged to compute the degree to which one or more correlation rules associated with one or more correlation objects are completed based on the number of component parts in a correlation rule that are populated with received event data.

23. The system of claim 22, where the root cause determiner (440) is arranged to rank one or more candidate root causes and to accept a manual input that selects the root cause.

24. The system of claim 14, further comprising a correlation rule fabricator for facilitating defining a correlation rule.

25. The system of claim 14, further comprising a cause and effect relationship fabricator for facilitating defining a cause and effect relationship.

26. The system of claim 14, further comprising root cause determination receiver means for receiving one or more root cause determinations from one or more root cause determiners, where the root cause determiner means (440) considers the one or more root cause determinations when determining the root cause of the one or more enterprise events.

27. The system of claim 14, where the system is implemented in one computer component.

28. The system of claim 14, where the system is distributed between two or more computer components.

29. The system of claim 14, where the interface means (480) is a graphical user interface.

## Patentansprüche

1. Computerimplementiertes Verfahren zur Verwaltung von Unternehmenskomponenten, umfassend:
Einrichten eines Satzes Komponenten, aus denen ein Unternehmensereignis erzeugt werden kann;
Einrichten (810) eines Satzes Korrelationsregeln, die das Bestimmen ermöglichen, ob ein Unternehmensereignis eine Hauptursache identifiziert;
Einrichten (820) eines Satzes Ursache-Wirkung-Beziehungen zwischen zwei oder mehr Unternehmenskomponenten zum Ermöglichen des Bestimmens, ob ein Unternehmensereignis eine Hauptursache identifiziert, wobei sich die Ursache-Wirkung-Beziehungen auf zwei oder mehr Unternehmenskomponenten beziehen;
Instanziieren (830) eines oder mehrerer Korrelationsobjekte zum Ermöglichen des Aggregierens verwandter Korrelationsregeln auf der Basis des Satzes Ursache-Wirkung-Beziehungen;
Empfangen (840), an einem Ereignisempfänger (420), eines Unternehmensereignisses, einschließlich Ereignisdaten, die mit dem Unternehmensereignis assoziiert sind;
Bestimmen, dass das Unternehmensereignis an einen Hauptursachenbestimmer (440) weitergeleitet werden soll;
Weiterleiten des Unternehmensereignisses an den Hauptursachenbestimmer (440) und Analysieren von Korrelationsobjekten, die in einem Korrelationsobjektdatenspeicher (460) gespeichert sind;
Bestimmen (850) einer Transaktionspipeline, aus der das Unternehmensereignis erzeugt wurde, wobei die Transaktionspipeline einen verknüpften Satz abhängiger Unternehmenskomponenten und/oder -objekte beinhaltet;
Identifizieren (860) eines oder mehrerer Korrelationsobjekte, die mit dem empfangenen Unternehmensereignis assoziiert sind, und Abrufen der aggregierten verwandten Korrelationsregeln, die mit dem identifizierten einen oder den identifizierten mehreren Korrelationsobjekten assoziiert sind;
Aktualisieren (870) einer oder mehrerer der abgerufenen Korrelationsregeln durch das Füllen von Komponententeilen der einen oder der mehreren Korrelationsregeln mit empfangenen Ereignisdaten, die mit dem Unternehmensereignis assoziiert sind;
Identifizieren von aktualisierten Korrelationsregeln, die mit den gefüllten Ereignisdaten bewertet werden können, und nachdem eine gewisse Anzahl von Unternehmensereignissen empfangen worden ist oder wenn eine Zeitdauer vergangen ist, Bestimmen (880), durch einen ersten Hauptursachenbestimmer, einer Hauptursache auf der Basis mindestens einer der identifizierten aktualisierten Korrelationsregeln, die bewertet werden können, und des Bestimmens von Komponenten, aus denen das Ereignis erzeugt wurde, wobei das Bestimmen der Hauptursache Folgendes umfasst:
Abrufen (882) eines instanziierten Korrelationsobjekts von dem einen oder den mehreren instanziierten Korrelationsobjekten,
Abrufen (883) von Korrelationsregeln, die mit dem abgerufenen instanziierten Korrelationsobjekt assoziiert sind,
Überprüfen einer abgerufenen Korrelationsregel durch das Bestimmen (884), dass eine Korrelation von den abgerufenen Korrelationsregeln abgeschlossen ist, und Einstufen (885) abgeschlossener Korrelationsregeln auf der Basis einer relativen Stelle in der Transaktionspipeline,
Bestimmen (886), ob es eine weitere Korrelationsregel gibt, die überprüft werden soll,
nach dem Bestimmen, dass es keine weiteren Korrelationsregeln gibt, die überprüft werden sollen, Bestimmen (887), ob es ein weiteres Korrelationsobjekt gibt, das verarbeitet werden soll,
nach dem Bestimmen, dass es keine weiteren Korrelationsobjekte gibt, die verarbeitet werden sollen, Auswählen (888) einer abgeschlossenen Regel als die Hauptursache auf der Basis der Einstufung;
Erzeugen (890) eines Indikators, der mit der Hauptursache assoziiert ist,
Bestimmen (1100), dass der erzeugte Indikator an einen weiteren Hauptursachenbestimmer weitergeleitet werden soll; und
Weiterleiten (1110) des bestimmten Indikators an den weiteren Hauptursachenbestimmer als ein weiteres Unternehmensereignis.

2. Verfahren nach Anspruch 1, wobei das Füllen von Komponententeilen der einen oder der mehreren Korrelationsregeln, für die das Unternehmensereignis gilt, das Parsen eines oder mehrerer Textfelder der empfangenen Ereignisdaten, die mit dem Unternehmensereignis assoziiert sind, und das Abstimmen des einen oder der mehreren Textfelder der empfangenen Ereignisdaten mit entsprechenden Textfeldern der identifizierten einen oder mehreren Korrelationsregeln umfasst.

3. Verfahren nach Anspruch 1, wobei eine Vielzahl von aktualisierten Korrelationsregeln, die mit den gefüllten Ereignisdaten bewertet werden können, identifiziert werden und wobei das Bestimmen einer Hauptursache das Auswählen zwischen der Vielzahl von identifizierten aktualisierten Korrelationsregeln umfasst.

4. Verfahren nach Anspruch 1, ferner umfassend das Durchführen einer Auswirkungsanalyse, um andere Unternehmenskomponenten, die möglicherweise von der identifizierten Haupursache betroffen sind, zu identifizieren.

5. Verfahren nach Anspruch 1, wobei auf der Basis des Indikators ein Ereignis an eine Downstream-Komponente weitergeleitet wird.

6. Verfahren nach Anspruch 1, wobei auf der Basis des Indikators eine Nachricht an eine Downstream-Komponente weitergeleitet wird.

7. Verfahren nach Anspruch 1, wobei auf der Basis des Indikators ein oder mehrere Failover-Prozesse laufen gelassen werden.

8. Verfahren nach Anspruch 1, wobei auf der Basis des Indikators ein oder mehrere Wartungsprozesse laufen gelassen werden.

9. Verfahren nach Anspruch 1, wobei das computerimplementierte Verfahren von einer einzelnen Computerkomponente durchgeführt wird.

10. Verfahren nach Anspruch 1, wobei das computerimplementierte Verfahren von zwei oder mehr Computerkomponenten durchgeführt wird.

11. Verfahren nach Anspruch 1, umfassend:
Initiieren eines Zeitgebers, der eine Zeitdauer misst, während der Unternehmensereignisse, die zum Bestimmen einer Hauptursache analysiert werden, gesammelt werden; und
Verzögern des Bestimmens einer Hauptursache bis nach dem Ende des Zeitgebers.

12. Verfahren nach Anspruch 11, ferner umfassend das Empfangen eines Unternehmensereignisses, nachdem der Zeitgeber abgelaufen ist, und das Bestimmen, ob das nach dem Ablaufen des Zeitgebers empfangene Unternehmensereignis die bestimmte Hauptursache wahrscheinlich ändert, wobei, falls bestimmt wird, dass das nach dem Ablaufen des Zeitgebers empfangene Unternehmensereignis die Hauptursache wahrscheinlich ändert, die Hauptursache, die aus dem Satz Unternehmensereignisse, die während des Laufens des Zeitgebers gesammelt wurden, bestimmt wurde, gestrichen wird und eine neue Hauptursache bestimmt wird.

13. Computerlesbares Medium, das computerausführbare Anweisungen zum Durchführen des Verfahrens nach einem der Ansprüche 1 bis 12, wenn die Anweisungen von einem Computer ausgeführt werden, speichert.

14. System zum Bestimmen einer Hauptursache eines Unternehmensereignisses, umfassend:
ein Unternehmensereignisempfängermittel (420) zum Empfangen eines Unternehmensereignisses, einschließlich Ereignisdaten, die mit dem Unternehmensereignis assoziiert sind;
einen Korrelationsregeldatenspeicher (450) zum Speichern einer oder mehrerer Korrelationsregeln, die das Bestimmen der Hauptursache eines Unternehmensereignisses ermöglichen;
einen Ursache-Wirkung-Datenspeicher (470) zum Speichern einer oder mehrerer Ursache-Wirkung-Beziehungen, die das Bestimmen der Hauptursache eines Unternehmensereignisses ermöglichen, wobei sich die Ursache-Wirkung-Beziehungen auf zwei oder mehr Unternehmenskomponenten beziehen, wobei der Ursache-Wirkung-Datenspeicher (470) eingerichtet ist, um eine oder mehrere
Transaktionspipelineabhängigkeitsbeziehungen zu speichern;
einen Korrelationsobjektdatenspeicher (460) zum Speichern eines oder mehrerer Korrelationsobjekte, die mit einer oder mehreren Kandidatenhauptursachen assoziiert sind, wobei die Korrelationsobjekte eine oder mehrere verwandte Korrelationsregeln umfassen, die auf der Basis des Satzes Ursache-Wirkung-Beziehungen aggregiert werden;
ein Hauptursachenbestimmermittel (440) zum Bestimmen der Hauptursache für ein oder mehrere Unternehmensereignisse durch Folgendes:
Identifizieren (860) eines oder mehrerer Korrelationsobjekte, die mit dem empfangenen Unternehmensereignis assoziiert sind, und Abrufen der aggregierten verwandten Korrelationsregeln, die mit dem identifizierten einen oder den identifizierten mehreren Korrelationsobjekten assoziiert sind;
Aktualisieren (870) einer oder mehrerer der abgerufenen Korrelationsregeln durch das Füllen von Komponententeilen der einen oder der mehreren Korrelationsregeln mit empfangenen Ereignisdaten, die mit dem Unternehmensereignis assoziiert sind; und
Identifizieren von aktualisierten Korrelationsregeln, die mit den gefüllten Ereignisdaten bewertet werden können, und nachdem eine gewisse Anzahl von Unternehmensereignissen empfangen worden ist oder wenn eine Zeitdauer vergangen ist, Bestimmen einer Hauptursache auf der Basis mindestens einer der identifizierten aktualisierten Korrelationsregeln, die bewertet werden können, und des Bestimmens von Komponenten, aus denen das Ereignis erzeugt wurde, wobei das Bestimmen der Hauptursache Folgendes umfasst:
Abrufen (882) eines instanziierten Korrelationsobjekts von dem einen oder den mehreren instanziierten Korrelationsobjekten,
Abrufen (883) von Korrelationsregeln, die mit dem abgerufenen instanziierten Korrelationsobjekt assoziiert sind,
Überprüfen einer abgerufenen Korrelationsregel durch das Bestimmen (884), dass eine Korrelation von den abgerufenen Korrelationsregeln abgeschlossen ist, und Einstufen (885) abgeschlossener Korrelationsregeln auf der Basis einer relativen Stelle in der Transaktionspipeline,
Bestimmen (886), ob es eine weitere Korrelationsregel gibt, die überprüft werden soll,
nach dem Bestimmen, dass es keine weiteren Korrelationsregeln gibt, die überprüft werden sollen, Bestimmen (887), ob es ein weiteres Korrelationsobjekt gibt, das verarbeitet werden soll,
nach dem Bestimmen, dass es keine weiteren Korrelationsobjekte gibt, die verarbeitet werden sollen, Auswählen (888) einer abgeschlossenen Regel als die Hauptursache auf der Basis der Einstufung,
Erzeugen (890) eines Indikators, der mit der Hauptursache assoziiert ist; und ein Schnittstellenmittel (480) zum Darstellen der bestimmten Hauptursache, wobei der Hauptursachenbestimmer ferner für Folgendes angepasst ist: Bestimmen (1100), dass der erzeugte Indikator an einen weiteren Hauptursachenbestimmer weitergeleitet werden soll, und Weiterleitern (1110) des bestimmten Indikators an den weiteren Hauptursachenbestimmer als ein weiteres Unternehmensereignis.

15. System nach Anspruch 14, wobei der Unternehmensereignisempfänger (420) eingerichtet ist, um ein oder mehrere Unternehmensereignisse von einer oder mehreren Unternehmenskomponenten und/oder einem Anbieter für manuelle Unternehmensereignisse zu empfangen.

16. System nach Anspruch 14, ferner umfassend ein Auswirkungsanalysiermittel (500) zum Bestimmen, ob Unternehmenskomponenten außer der Unternehmenskomponente, die mit der Hauptursache assoziiert ist, wahrscheinlich von der Hauptursache eines Unternehmensereignis betroffen sind.

17. System nach Anspruch 16, wobei das Auswirkungsanalysiermittel (500) eingerichtet ist, um selektiv mindestens eines von dem Benachrichtigen einer betroffenen Unternehmenskomponente über die Hauptursache durchzuführen und eine Auswirkungsverarbeitung zu initiieren, die mit der betroffenen Unternehmenskomponente assoziiert ist,.

18. System nach Anspruch 17, wobei das Auswirkungsanalysiermittel (500) eingerichtet ist, um eine Auswirkungsverarbeitung durchzuführen, umfassend mindestens eines von Failover-Verarbeitung, Neustart-Verarbeitung, Herunterfahren-Verarbeitung, Sicherheitsverarbeitung und Wartungsverarbeitung.

19. System nach Anspruch 15, umfassend einen Ereignisprotokolldatenspeicher (600) zum Speichern empfangener Unternehmensereignisse.

20. System nach Anspruch 19, wobei der Ereignisprotokolldatenspeicher (600) eingerichtet ist, um selektiv empfangene Unternehmensereignisse zu speichern, wobei die Auswahl auf der Basis der Eindeutigkeit eines Unternehmensereignisses, das Reduzieren des Speicherbedarfs durch das Reduzieren der Anzahl von gespeicherten doppelten Unternehmensereignissen zu ermöglichen, getroffen wird.

21. System nach Anspruch 14, umfassend einen Hauptursachenprotokolldatenspeicher (610) zum Speichern bestimmter Hauptursachen.

22. System nach Anspruch 14, wobei der Hauptursachenbestimmer (440) eingerichtet ist, um den Grad zu berechnen, zu dem eine oder mehrere Korrelationsregeln, die mit einem oder mehreren Korrelationsobjekten assoziiert sind, abgeschlossen sind, auf der Basis der Anzahl von Komponententeilen in einer Korrelationsregel, die mit empfangenen Ereignisdaten gefüllt sind.

23. System nach Anspruch 22, wobei der Hauptursachenbestimmer (440) eingerichtet ist, um eine oder mehrere Kandidatenhauptursachen einzustufen und um eine manuelle Eingabe, welche die Hauptursache auswählt, zu akzeptieren.

24. System nach Anspruch 14, ferner umfassend einen Korrelationsregelhersteller, um das Definieren einer Korrelationsregel zu ermöglichen.

25. System nach Anspruch 14, ferner umfassend einen Ursache-Wirkung-Beziehungshersteller, um das Definieren einer Ursache-Wirkung-Beziehung zu ermöglichen.

26. System nach Anspruch 14, ferner umfassend ein Hauptursachenbestimmungsempfängermittel zum Empfangen einer oder mehrerer Hauptursachenbestimmungen von einem oder mehreren Hauptursachenbestimmern, wobei das Hauptursachenbestimmermittel (440) die eine oder die mehreren Hauptursachenbestimmungen beim Bestimmen der Hauptursache des einen oder der mehreren Unternehmensereignisse berücksichtigt.

27. System nach Anspruch 14, wobei das System in einer Computerkomponente implementiert ist.

28. System nach Anspruch 14, wobei das System zwischen zwei oder mehr Computerkomponenten verteilt ist.

29. System nach Anspruch 14, wobei das Schnittstellenmittel (480) eine grafische Benutzerschnittstelle ist.

## Revendications

1. Procédé mis en oeuvre par ordinateur pour une gestion de composants d'entreprise, comprenant :
un établissement d'un ensemble de composants à partir desquels un événement d'entreprise peut être généré ;
un établissement (810) d'un ensemble de règles de corrélation qui facilitent une détermination du fait qu'un événement d'entreprise identifie une cause profonde ;
un établissement (820) d'un ensemble de relations de cause et d'effet entre deux ou plusieurs composants d'entreprise pour faciliter une détermination du fait qu'un événement d'entreprise identifie une cause profonde, où les relations de cause et d'effet concernent deux ou plusieurs composants d'entreprise ;
une instanciation (830) d'un ou de plusieurs objets de corrélation pour faciliter une agrégation de règles de corrélation connexes sur la base de l'ensemble de relations de cause et d'effet ;
une réception (840), au niveau d'un récepteur d'événement (420), d'un événement d'entreprise incluant des données d'évènement associées à l'évènement d'entreprise ;
une détermination du fait que l'événement d'entreprise doit être transféré à un déterminant de cause profonde (440) ;
un transfert de l'évènement d'entreprise au déterminant de cause profonde (440) et une analyse d'objets de corrélation stockés dans une mémoire de données d'objet de corrélation (460) ;
une détermination (850) d'un pipeline de transaction à partir duquel l'événement d'entreprise a été généré, le pipeline de transaction incluant un ensemble lié de composants et/ou d'objets d'entreprise dépendants ;
une identification (860) d'un ou de plusieurs objets de corrélation associés à l'évènement d'entreprise reçu et une récupération des règles de corrélation connexes agrégées associées aux un ou plusieurs objets de corrélation identifiés ;
une mise à jour (870) d'une ou de plusieurs desdites règles de corrélation récupérées, en peuplant des parties de composant des une ou plusieurs règles de corrélation avec des données d'évènement reçues associées à l'évènement d'entreprise ;
une identification de règles de corrélation mises à jour qui peuvent être évaluées avec les données d'événement peuplé et après qu'un certain nombre d'évènements d'entreprise a été reçu ou lorsqu'une période de temps s'est écoulée, une détermination (880), par un premier déterminant de cause profonde, d'une cause profonde sur la base d'au moins une des règles de corrélation mises à jour identifiées qui peuvent être évaluées et de la détermination de composants à partir desquels l'évènement a été généré, dans lequel une détermination de la cause profonde comprend
une récupération (882) d'un objet de corrélation instancié à partir des un ou plusieurs objets de corrélation instanciés ;
une récupération (883) de règles de corrélation associées à l'objet de corrélation instancié récupéré,
un examen d'une règle de corrélation récupérée en déterminant (884) le fait qu'une corrélation à partir des règles de corrélation récupérées est terminée, et un classement (885) de règles de corrélation terminées sur la base d'un emplacement relatif dans le pipeline de transaction,
une détermination (886) du fait qu'il y a une autre règle de corrélation à examiner,
lors d'une détermination du fait qu'il n'y a pas d'autres règles de corrélation à examiner, une détermination (887) du fait qu'il y a un autre objet de corrélation à traiter,
lors d'une détermination du fait qu'il n'y a pas d'autres objets de corrélation à traiter, une sélection (888) d'une règle terminée à titre de la cause profonde sur la base du classement ;
une génération (890) d'un indicateur associé à la cause profonde,
une détermination (1100) du fait que l'indicateur généré devrait être transféré à un autre déterminant de cause profonde ; et
un transfert (1110) de l'indicateur déterminé à l'autre déterminant de cause profonde à titre d'autre événement d'entreprise.

2. Procédé selon la revendication 1, dans lequel un peuplement de parties de composant des une ou plusieurs règles de corrélation auxquelles l'événement d'entreprise s'applique comprend un parsage d'un ou de plusieurs champs textuels des données d'évènement reçues associées à l'évènement d'entreprise, et une mise en correspondance desdits un ou plusieurs champs textuels des données d'évènement reçues avec des champs textuels respectifs des une ou plusieurs règles de corrélation identifiées.

3. Procédé selon la revendication 1, dans lequel une pluralité de règles de corrélation mises à jour qui peuvent être évaluées avec les données d'évènement peuplé est identifiée, et dans lequel une détermination d'une cause profonde comprend une sélection entre ladite pluralité de règles de corrélation mises à jour identifiées.

4. Procédé selon la revendication 1, comprenant en outre une réalisation d'une analyse d'impact pour identifier d'autres composants d'entreprise potentiellement impactés par la cause profonde identifiée.

5. Procédé selon la revendication 1, où sur la base de l'indicateur un événement est transféré vers un composant en aval.

6. Procédé selon la revendication 1, où sur la base de l'indicateur un message est transféré vers un composant en aval.

7. Procédé selon la revendication 1, où sur la base de l'indicateur un ou plusieurs processus auxiliaires sont exécutés.

8. Procédé selon la revendication 1, où sur la base de l'indicateur un ou plusieurs processus de maintenance sont exécutés.

9. Procédé selon la revendication 1, où le procédé mis en oeuvre par ordinateur est réalisé par un unique composant informatique.

10. Procédé selon la revendication 1, où le procédé mis en oeuvre par ordinateur est réalisé par deux ou plusieurs composants informatiques.

11. Procédé selon la revendication 1, comprenant :
une initiation d'un compteur qui mesure une période de temps durant laquelle des événements d'entreprise qui seront analysés pour la détermination d'une cause profonde sont collectés ; et
un retardement d'une détermination d'une cause profonde jusqu'à après que le compteur est écoulé.

12. Procédé selon la revendication 11, comprenant en outre une réception d'un événement d'entreprise après que le compteur a expiré et une détermination du fait que l'évènement d'entreprise reçu après que le compteur a expiré est susceptible de changer la cause profonde déterminée, dans lequel s'il est déterminé que l'évènement d'entreprise reçu après que le compteur a expiré est susceptible de changer la cause profonde déterminée, la cause profonde déterminée à partir de l'ensemble d'évènements d'entreprise collectés durant l'exécution du compteur est annulée et une nouvelle cause profonde est déterminée.

13. Support lisible par ordinateur stockant des instructions exécutables par ordinateur pour une réalisation du procédé selon l'une quelconque des revendications 1 à 12 lorsque les instructions sont exécutées par un ordinateur.

14. Système de détermination d'une cause profonde d'un événement d'entreprise, comprenant :
un moyen de réception d'évènement d'entreprise (420) pour une réception d'un événement d'entreprise incluant des données d'évènement associées à l'évènement d'entreprise ;
une mémoire de données de règles de corrélation (450) pour un stockage d'une ou de plusieurs règles de corrélation qui facilitent une détermination de la cause profonde d'un événement d'entreprise ;
une mémoire de données de cause et d'effet (470) pour un stockage d'une ou de plusieurs relations de cause et d'effet qui facilitent une détermination de la cause profonde d'un événement d'entreprise, où les relations de cause et d'effet sont liées à deux ou plusieurs composants d'entreprise, dans lequel la mémoire de données de cause et d'effet (470) est agencée pour stocker une ou plusieurs relations de dépendance de pipeline de transaction ;
une mémoire de données d'objets de corrélation (460) pour un stockage d'un ou de plusieurs objets de corrélation associés à une ou plusieurs causes profondes candidates, où les objets de corrélation comprennent une ou plusieurs règles de corrélation connexes qui sont agrégées sur la base de l'ensemble de relations de cause et d'effet ;
un moyen de détermination de cause profonde (440) pour une détermination de la cause profonde pour un ou plusieurs événements d'entreprise :
en identifiant (860) un ou plusieurs objets de corrélation associés à l'évènement d'entreprise reçu et en récupérant les règles de corrélation connexes agrégées associées aux un ou plusieurs objets de corrélation identifiés ;
en mettant à jour (870) une ou plusieurs desdites règles de corrélation récupérées, en peuplant des parties de composant des une ou plusieurs règles de corrélation avec des données d'évènement reçues associées à l'évènement d'entreprise ; et
en identifiant des règles de corrélation mises à jour qui peuvent être évaluées avec les données d'évènement peuplé et après qu'un certain nombre d'évènements d'entreprise a été reçu ou lorsqu'une période de temps s'est écoulée, en déterminant une cause profonde sur la base d'au moins une des règles de corrélation mises à jour identifiées qui peuvent être évaluées et de la détermination de composants à partir desquels l'évènement a été généré, dans lequel une détermination de la cause profonde comprend
une récupération (882) d'un objet de corrélation instancié à partir des un ou plusieurs objets de corrélation instanciés ;
une récupération (883) de règles de corrélation associées à l'objet de corrélation instancié récupéré,
un examen d'une règle de corrélation récupérée en déterminant (884) le fait qu'une corrélation à partir des règles de corrélation récupérées est terminée, et un classement (885) de règles de corrélation terminées sur la base d'un emplacement relatif dans le pipeline de transaction,
une détermination (886) du fait qu'il y a une autre règle de corrélation à examiner,
lors d'une détermination du fait qu'il n'y a pas d'autres règles de corrélation à examiner, une détermination (887) du fait qu'il y a un autre objet de corrélation à traiter,
lors d'une détermination du fait qu'il n'y a pas d'autres objets de corrélation à traiter, une sélection (888) d'une règle terminée à titre de la cause profonde sur la base du classement ;
une génération (890) d'un indicateur associé à la cause profonde ; et un moyen d'interface (480) pour une présentation de la cause profonde déterminée, dans lequel le déterminant de cause profonde est en outre adapté pour déterminer (1100) le fait que l'indicateur généré devrait être transféré à un autre déterminant de cause profonde, et transférer (1110) l'indicateur déterminé à l'autre déterminant de cause profonde à titre d'autre événement d'entreprise.

15. Système selon la revendication 14, où le récepteur d'évènement d'entreprise (420) est agencé pour recevoir un ou plusieurs événements d'entreprise à partir d'au moins un d'un ou de plusieurs composants d'entreprise et d'un fournisseur d'événement d'entreprise manuel.

16. Système selon la revendication 14, comprenant en outre un moyen d'analyse d'impact (500) pour une détermination du fait que des composants d'entreprise autres que le composant d'entreprise associé à la cause profonde sont susceptibles d'être affectés par la cause profonde d'un événement d'entreprise.

17. Système selon la revendication 16, où le moyen d'analyse d'impact (500) est agencé pour réaliser de manière sélective au moins une d'une notification d'un composant d'entreprise affecté de la cause profonde, et initier un traitement d'impact associé au composant d'entreprise affecté.

18. Système selon la revendication 17, où le moyen d'analyse d'impact (500) est agencé pour réaliser un traitement d'impact comprenant au moins un d'un traitement auxiliaire, d'un traitement de redémarrage, d'un traitement d'arrêt, d'un traitement de sécurité, et d'un traitement de maintenance.

19. Système selon la revendication 15, comprenant un mémoire de données de journal d'évènements (600) pour un stockage d'évènements d'entreprise reçus.

20. Système selon la revendication 19, dans lequel la mémoire de données de journal d'évènements (600) est agencée pour stocker de manière sélective des événements d'entreprise reçus, où la sélection est faite sur la base du caractère unique d'un événement d'entreprise pour faciliter une réduction d'exigences de stockage en réduisant le nombre d'évènements d'entreprises en double stockés.

21. Système selon la revendication 14, comprenant une mémoire de données de journal de causes profondes (610) pour un stockage de causes profondes déterminées.

22. Système selon la revendication 14, où le déterminant de cause profonde (440) est agencé pour calculer le degré auquel une ou plusieurs règles de corrélation associées à un ou plusieurs objets de corrélation sont terminées sur la base du nombre de parties de composant dans une règle de corrélation qui sont peuplées avec des données d'évènement reçues.

23. Système selon la revendication 22, où le déterminant de cause profonde (440) est agencé pour classer une ou plusieurs causes profondes candidates et pour accepter une entrée manuelle qui sélectionne la cause profonde.

24. Système selon la revendication 14, comprenant en outre un dispositif de fabrication de règle de corrélation pour une facilitation d'une définition d'une règle de corrélation.

25. Système selon la revendication 14, comprenant en outre un dispositif de fabrication de relation de cause et d'effet pour une facilitation d'une définition d'une relation de cause et d'effet.

26. Système selon la revendication 14, comprenant en outre un moyen de réception de détermination de cause profonde pour une réception d'une ou de plusieurs déterminations de cause profonde à partir d'un ou de plusieurs déterminants de cause profonde, où le moyen de détermination de cause profonde (440) prend en considération les une ou plusieurs déterminations de cause profonde lors d'une détermination de la cause profonde des un ou plusieurs événements d'entreprise.

27. Système selon la revendication 14, où le système est mis en oeuvre dans un composant informatique.

28. Système selon la revendication 14, où le système est distribué entre deux ou plusieurs composants informatiques.

29. Système selon la revendication 14, où le moyen d'interface (480) est une interface d'utilisateur graphique.
